(19) **Europäisches Patentamt**
**European Patent Office**
**Office européen des brevets**

(11) **EP 3 910 967 B1**

(12) **EUROPEAN PATENT SPECIFICATION**

(45) Date of publication and mention
of the grant of the patent:
**14.06.2023 Bulletin 2023/24**

(21) Application number: **20196664.5**

(22) Date of filing: **17.09.2020**

(51) International Patent Classification (IPC):
*H04W 4/02* <sup>(2018.01)</sup>   *H04W 4/33* <sup>(2018.01)</sup>
*H04W 4/70* <sup>(2018.01)</sup>

(52) Cooperative Patent Classification (CPC):
**H04W 4/026; H04W 4/33; H04W 4/70**

(54) **METHOD AND DEVICE FOR POSITIONING INTERNET OF THINGS DEVICES**

VERFAHREN UND VORRICHTUNG ZUR POSITIONIERUNG VON
INTERNET-DER-DINGE-VORRICHTUNGEN

PROCÉDÉ ET DISPOSITIF DE POSITIONNEMENT DE DISPOSITIFS DE L'INTERNET DES OBJETS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.05.2020 PCT/CN2020/090695**

(43) Date of publication of application:
**17.11.2021 Bulletin 2021/46**

(73) Proprietor: **Beijing Xiaomi Mobile Software Co.,
Ltd.
Beijing 100085 (CN)**

(72) Inventors:
• **CHAMPEL, Mary-Luc Georges Henry
Beijing, Beijing 100085 (CN)**

• **YU, Lei
Beijing, Beijing 100085 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**US-A1- 2016 239 585    US-A1- 2020 110 934
US-B2- 9 191 650**

**Description**

Background

It is an object of the present disclosure to provide a method for positioning an internet of things (IoT) device with an augmented reality (AR) glasses. Further, it is an object of the present disclosure to provide a data processing device and a software for positioning of an IoT device.

More and more objects in the home are now connected together and to the Internet. The connection to the internet of IoT devices in the home is usually done through a home network gateway which is in charge of routing messages between devices or from devices to outside of the home (through the internet) across many different types of networks such as Bluetooth, ZigBee or Wi-Fi.

From a user's point of view, IoT devices are often controlled by at least one home automation system that is accessible both within the home (typically over Wi-Fi) or from outside the home (essentially over internet). It is not rare that multiple IoT devices belong to different home automation eco-systems and users sometimes have to juggle between different home automation applications or use bridge applications that are usually complex to set-up and do not offer all functionalities of the original home automation application.

Moreover, with the increasing number of IoT devices in the home, it becomes more and more tedious to quickly operate a single device from the home automation application.

A first solution that has been introduced in the prior art is to use voice control systems to control the IoT devices.

In any case the position of the IoT device is necessary in order to properly address the IoT device. Position indication of IoT devices is up to a certain degree present in every single home automation system today but it is always limited to just room categorizations. For instance, a connected light bulb may be identified as part of the living room but there is no information whatsoever about where exactly in the living room the light is. And if there are several lights, it becomes impossible to differentiate them unless the user has assigned them different names on purpose which need to be remembered by the user and distributed to all users of the home automation system.

Moreover, home automation systems usually have very little information about the spatial configuration of the home; at most it knows how many rooms are present. Only one IoT device today has such additional knowledge: the connected vacuum cleaner robot which typically performs a scan of the home to better define its sweeping path. But although such a home map or indoor map is generated, it is not shared with other devices or with the home automation system. In the future, it is also foreseen that other IoT devices such as video camera with ToF (Time-of-Flight) sensors will also be able to provide or at least help in building such indoor maps.

Thus, for better control of IoT devices, exact positions of the IoT devices are necessary. Positioning, i.e. the initial determination of the position of a new implemented IoT device, and subsequent locating the already positioned IoT devices become crucial for efficient control of home automation systems.

Hence, it is an object of the present disclosure to provide a method and a data processing device in order to position IoT devices.

US 2016/239585A1 discloses a method comprising: obtaining a three-dimensional (3D) model of a space; obtaining relative positions of a plurality of uniquely identifiable devices in said space; mapping a first uniquely identifiable device to a first object in the 3D model; selecting a second uniquely identifiable device; determining possible locations of the second uniquely identifiable device in said space on the basis of relative distance between the first and second uniquely identifiable device; and mapping the second uniquely identifiable device to a second object in the 3D model, said second object locating in one of said possible locations.

US 2020/0110934A1 discloses a method and system including: receiving an indication of a location of an asset from a tag associated with and adjacent to the asset, where the location of the asset is within a known mapping of an indoor environment; receiving an indication of a location of an augmented reality device, where the indicated location of the asset is within the known mapping of the indoor environment; determining a location of the asset relative to the augmented reality device based on the received information from the asset and the received information from the augmented device; determining contextual directions from the determined location of the augmented reality device to the indicated location of the asset; and presenting, in a current field of view display on the augmented reality device a combination of a representation of the determined location of the asset and a representation of the determined contextual directions.

Summary

The object of the invention is achieved by the subject-matter of the independent claims. Advantageous embodiments are defined in the dependent claims. Further examples are provided for facilitating the understanding of the invention.

Thus, by the present disclosure positioning of an IoT device is facilitated by use of AR glasses. Therein, first the AR-position and the viewing direction of the AR glasses on an acquired indoor map is determined and this information is used to determine the IoT-position of the IoT device to be positioned. Thus, it is not necessary anymore to manually indicate the position of the IoT device. By the known IoT-position of the IoT device control of the IoT devices within a home automation application can be easily controlled and identification within the home automation application of the individual IoT devices is simplified due to the determined IoT-position. Thus, even if same or similar IoT devices are present in just one room more than once, these IoT devices can be clearly distinguished by their exact position.

Brief Description of the Drawings

Reference will now be made, by way of example, to the accompanying drawings which show example embodiments of the present application, and in which the Figures show:

Fig. 1 a first embodiment of the method according to the present disclosure

Fig. 2 an exemplified indoor map according to the present disclosure

Fig. 3 a detailed embodiment of the method according to the present disclosure

Fig. 4 a detailed embodiment for determining the AR-position and viewing direction of the AR glasses

Fig. 5 a detailed embodiment of the method according to the present disclosure

Fig. 6 a schematic drawing for determining the AR-position and viewing direction of the AR glasses according to the present disclosure

Fig. 7 a schematic drawing for the calculation steps of the AR-position of the AR glasses

Fig. 8 a detailed embodiment of the method according to the present disclosure

Fig. 9 detailed embodiment of the method according to the present disclosure

Fig. 10 an exemplified drawing for calculation of the IoT-position of the IoT device to be positioned and

Fig. 11 a data processing device according to the present disclosure.

Detailed Description of the Embodiments

The present application describes a method for determining the position of an IoT device on an indoor map, which is referred to in the following as IoT-position. Therein, AR glasses are used to position the IoT device. In order to be able to determine the IoT-position of the IoT device, in a first step, position and viewing direction of the AR glasses on the indoor map must be determined. Therein, in the following it is referred to the position AR glasses as AR-position.

Some IoT devices are already present in today's home automation systems which generate an indoor map in order to perform their tasks. However, these maps are not shared with other IoT devices and are usually not shared with the home automation system. Thus, currently the exact position of IoT devices within the home automation system are not known or somehow utilized in order to control the IoT devices.

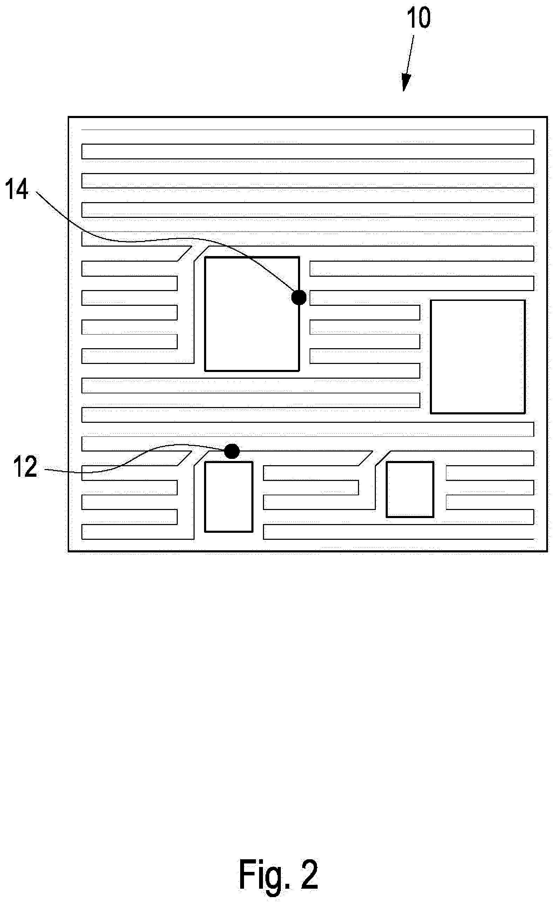

One of the IoT devices capable of creating an indoor map are vacuum cleaner robots. In many home automation systems, which include a vacuum cleaner robot, the robot has the capability to scan the home (typically with SLAM laser) and build a map of the home to fulfill their tasks. An example of an indoor map 10 is shown in Fig. 2. On the indoor map 10 a vacuum cleaner robot 12 is indicated and a docking station 14. Further, the indoor map exemplifies the moving trajectory of the vacuum cleaner robot 10 leading the vacuum cleaner robot around objects while cleaning the whole area. Such a map is typically only used by the robot vacuum cleaner in order to define an optimal sweeping path for the home while allowing users to have a clear representation of the path followed by the vacuum cleaner.

With the increasing number of IoT devices in the home, it becomes interesting to share such map between all IoT devices and position each of them on the map. This allows users to have a visual access to their devices through the home automation application rather than finding the IoT device in a list of rooms or devices.

For example, the home contains several light bulbs, a set of speakers, a TV set and a vacuum cleaner which can all be operated from the home automation application. Operating light bulbs is usually a tedious operation when there are several light bulbs in the home as the user first needs to identify precisely in the application which light bulb he wants to operate.

Thus, by using a map indicating the exact position of the IoT device such as a light bulb, it becomes possible to just point and click on the desired IoT device to activate, i.e. switch on, the IoT device.

The present disclosure provides a method for determining the IoT-position of IoT devices by an AR glasses. However, in order to determine the IoT-position of the IoT devices on the indoor map, first determining of the AR-position and viewing direction of the AR glasses on the indoor map must be performed. Once this is done, the tracking of the AR glasses in time can be performed due to one or more sensors in the AR glasses able to track motion of the AR glasses. Such sensor implemented in the AR glasses can be an accelerometer, a gyrometer, a compass or a video camera. Preferably, more than one and more preferably all of these sensors are implemented in the AR glasses combinedly.

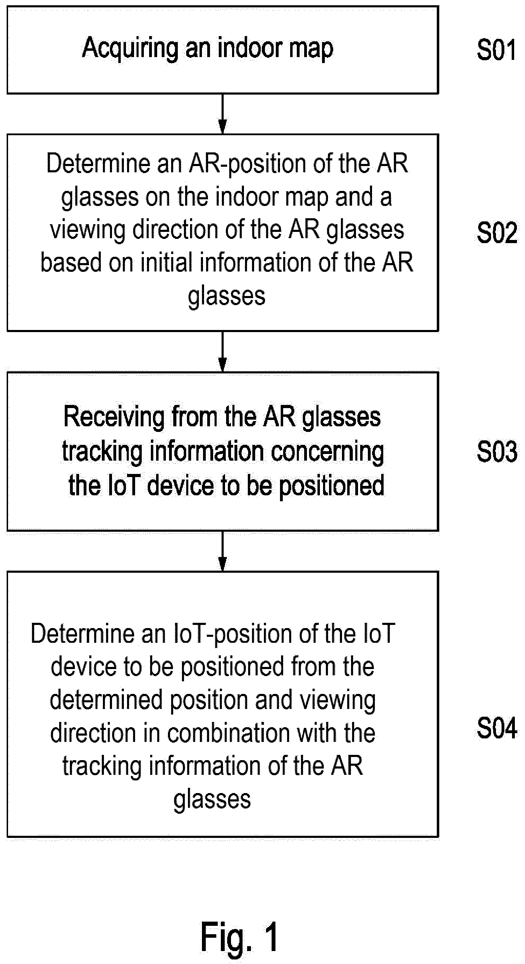

The method according to the present disclosure is shown schematically in Fig. 1 comprises the steps of:

S01: acquiring an indoor map;

S02: determining an AR-position of the AR glasses on the indoor map and a viewing direction of the AR glasses based on initial information of the AR glasses;

S03: receiving from the AR glasses tracking information concerning the IoT device to be positioned; and

S04: determining the IoT-position of the IoT device to be positioned from the determined AR-position and viewing direction in combination with the tracking information of the AR glasses.

In order to determine the AR-position and viewing direction of the AR glasses on the indoor map in a first solution the user can input on a terminal the AR-position of the AR glasses and the viewing direction directly on the indoor map. The method comprises the step S021: Receiving user input on a terminal indicating the AR-position of the AR glasses on the indoor map and the viewing direction.

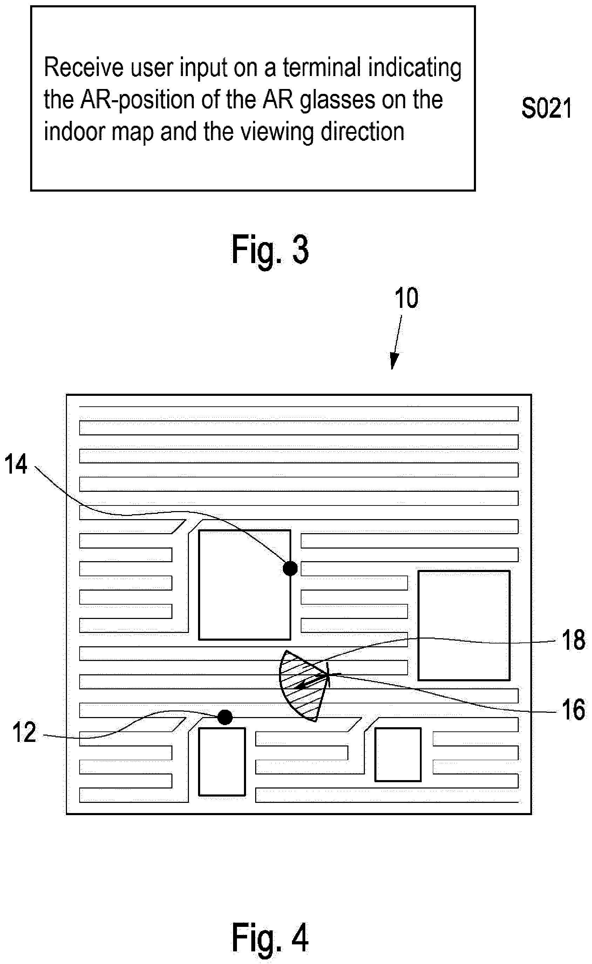

As shown in Fig. 4 showing the exemplified indoor map 10 the AR glasses are at the AR-position 16 indicated by the "X" being directed towards the vacuum cleaner robot 12. Thus, the user may indicate on the indoor map 10 on his terminal device the AR-position 16 and also the viewing direction indicated by the arrow 18 by a user input, such as a click, touch and/or drawing input. Thus, the AR-position and the viewing direction of the AR glasses is known. A change of AR-position and viewing direction is tracked in real-time by the sensors of the AR glasses and change of AR-position and/or viewing direction of the AR glasses can be determined. Thus, once the AR glasses are located on the indoor map in combination with the viewing direction, this information can be used in order to position an IoT device in order to determine the IoT-position of this IoT device.

Therein it is not necessary to determine an absolute position of the AR glasses. Relative position with respect to the indoor map is sufficient.

Although in the foregoing it is described that the indoor map generated by a vacuum cleaner robot is used, any other indoor map generated by any other device, such as a surveillance camera or the like, can be used.

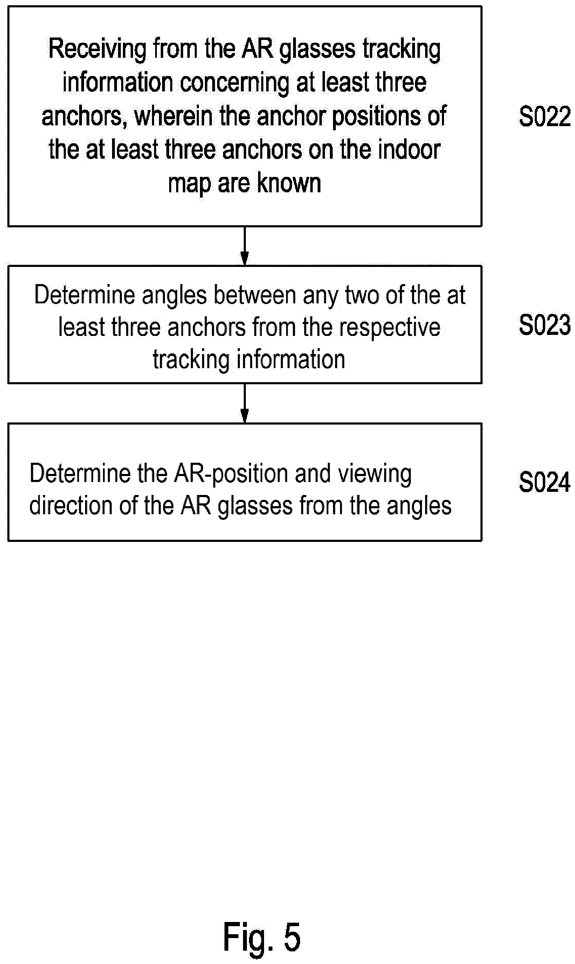

Referring now to a second solution for determining the AR-position and viewing direction of the AR glasses as schematically shown in Fig. 5 including the steps of:

S022: receiving from the AR glasses tracking information concerning at least three anchors, wherein the anchor positions of the at least three anchors on the indoor map are known;

S023: determining the angles between any two of the at least three anchors; and

S024: determining the AR-position and viewing direction from the angles.

Thus, three anchors are used in order to determine the AR-position and the viewing direction of the AR glasses, wherein the position of the anchors on the indoor map 10 are known. Therein, the three anchors can be provided by IoT devices with a known position. In particular, if a vacuum cleaner robot 12 is present in the home automation system, then the docking station 14 of the vacuum cleaner robot 12 having a known position on the indoor map 10 might be used as one anchor; the vacuum cleaner robot 12 itself, having a known position on the indoor map 10, might be used as further anchor. Thus, only one additional anchor with known position is necessary in order to facilitate determination of the AR-position and viewing direction of the AR glasses.

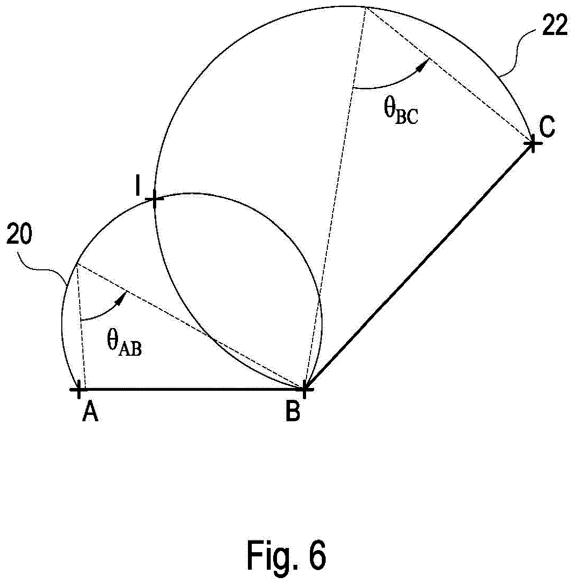

The situation is schematically depicted in Fig. 6 with a first anchor A, a second anchor B and a third anchor C, wherein the positions of the anchors A, B, C on the indoor map 10 are known. In order to determine the AR-position of the AR glasses, first an angle $\theta_{AB}$ between the anchor A and the anchor B is determined providing possible positions of the AR glasses on the first arc 20. Determination of the angle $\theta_{AB}$ might be provided by one or more of the sensors implemented in the AR glasses. Thus, the user first directs the AR glasses onto the anchor A, indicates the object of anchor A in order to identify anchor A to be able to retrieve the position of the anchor A on the indoor map. Then the user turns the head in order direct the AR glasses onto the anchor B, indicates the object of anchor B in order to be able to retrieve the position of anchor B on the indoor map. By turning the head and directing the AR glasses from the first anchor A to the second anchor B, the AR glasses are turned by the angle $\theta_{AB}$ that is determined and used for determining the AR-position and angle of the AR glasses. Therein, preferably, the user remains at the same position.

The same steps for determining the angle $\theta_{AB}$ as described above are again performed for the anchors points B and C in order to determine the respective angle $\theta_{BC}$. $\theta_{BC}$ provides a second arc 22 of a possible position of the AR glasses, wherein the intersection I of the first arc 20 and the second arc 22 indicates the AR-position of the AR glasses. From the AR-position of the AR glasses viewing direction towards one of the anchors A, B or C can be determined and thus AR-position and viewing direction of the AR glasses are fully determined.

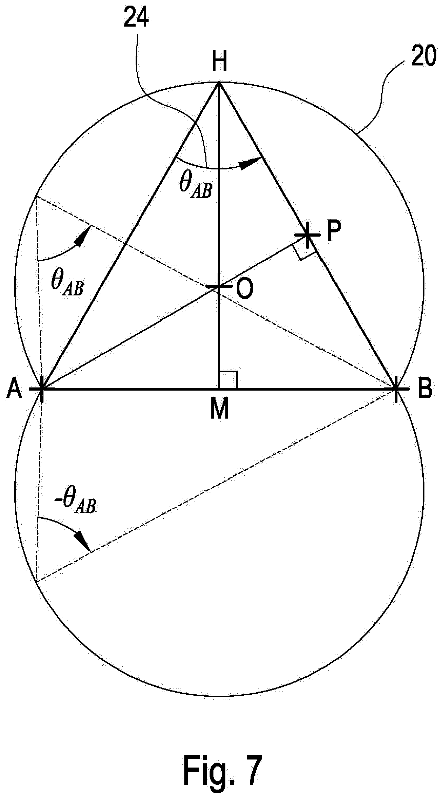

Fig. 7 shows a schematic situation with only two anchors for simplification illustrating the mathematical steps in order to determine the first arc 20. The method for determining the first arc 20 comprises the steps of:

1.) Consider point H in Fig. 7 as point on the median of the line segment AB (This means that the connecting line segment HM is perpendicular to the line segment AB and intersecting the line segment AB in the middle. Thus, an equilateral triangle $\triangle ABH$ is created) on which the angle 24 (denoted as >AHB - the line segment AH being pivot around point H until overlapping the line segment HB) is equal to $\theta_{AB}$.

Therein, the direction of the angle is indicated by the arrow 24 and is defined here and in the following counter-clockwise as positive direction.

2.) The triangle △HBM with M being in the middle of AB is determined and the distance HM is calculated by

$$HM = \frac{1}{2} AB \cot \frac{\theta_{AB}}{2}.$$

3.) In the triangle △HOP with P in the middle of the distance HB and the line segment OP perpendicular to the line segment HB, it is possible to calculate the distance HO being the radius of the first arc 20 with

$$\cos \frac{\theta_{AB}}{2} = \frac{HM}{HB} = \frac{HB/2}{HO},$$

$$\Leftrightarrow HO = \frac{HB/2}{\cos \frac{\theta_{AB}}{2}}.$$

4.) The distance HM expressed using HO is given by

$$HM = 2HO \cos^2 \frac{\theta_{AB}}{2}$$

By using the relation $HM = HB \cos \theta_{AB}$ given from Fig. 7.

5.) Then the distance OM can be calculated by

$$OM = HM - HO,$$

inserting the formulas for HM and HO gives

$$OM = \frac{1}{2} AB \cot \theta_{AB}.$$

Thereby the trigonometric identities $\sin 2\theta = 2 \sin \theta \cos \theta$ and $\cos 2\theta = 2 \cos^2 \theta - 1$ are used.

Thus, the position of point O is known due to knowledge of the length *OM* and knowledge of point M. Further, the radius HO for the first arc 20 passing through the points A, B and H is known as well. Thus, it is possible to calculate the quadric equation for the first cycle 20. The same steps are repeated for the anchor B and anchor C in order to calculate the quadric equation for the second cycle 22 as shown in Fig. 6. Thus, the system of the two quadric equations for the first arc 20 and the second arc 22 is solved providing two solutions: B and the actual position of the AR glasses indicated by the intersection I of the first cycle 20 and the second cycle 22.

As shown in Fig. 7 with knowledge only of the value of $\theta_{AB}$ two possible first arcs 20 and 20' exist. However, if the direction/sign of the angle $\theta_{AB}$ is known, the first arc becomes unique. As indicated in Fig. 7, if the angle with direction is determined as $+\theta_{AB}$, then arc 20 is determined as first arc. If the angle with direction is determined as $-\theta_{AB}$, then the arc 20' would uniquely indicate possible AR-positions of the AR glasses. Thus, by the direction of the angle no ambiguity arises for the first arc 20 and similar also the second arc 22. Thus, also the intersection I provides a unique solution. Preferably, the direction of the angles are determined by one of the sensors in the AR glasses and/or the compass information.

However, even if the directions of the angles between the anchors are not known, it is still possible to determine a solution for the AR-position of the AR glasses. If the AR glasses are not positioned at the anchor B or at least not to close and the angle ∢ABC between the anchors is larger than 0° and smaller than 180°, then the point of intersection I of the two arcs 20, 22 far away from anchor B is the position of the AR glasses.

Alternatively, a fourth anchor need to be used to provide a unique solution for the position of the AR glasses on the indoor map.

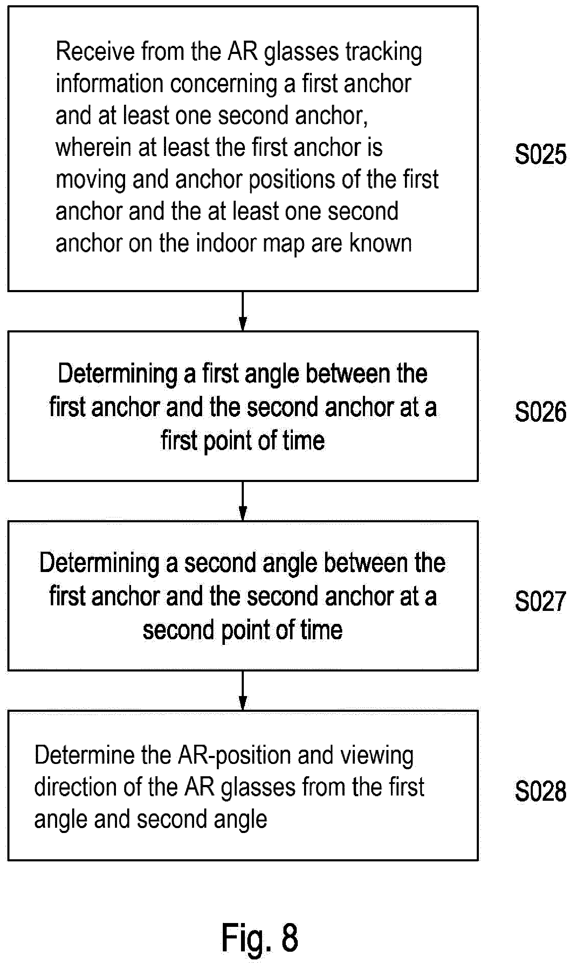

Preferably, if one of the anchors is provided by the vacuum cleaner robot 12 moving with known position, the vacuum cleaner robot 12 can be used as first anchor as described above at a first point of time and as second anchor at a second point of time. Thus, the method to determine the AR-position and the viewing direction of the AR glasses is shown in Fig. 8 and includes the steps of: S025: receiving from the AR glasses tracking information concerning a first anchor and at least one second anchor, wherein at least the first anchor is moving and the anchor positions of the first anchor and the at least one second anchor on the indoor map are known;

S026: determining a first angle between the first anchor and the second anchor at a first point of time;
S027: determining a second angle between the first anchor and the second anchor at a second point of time, wherein the anchor position of at least the first anchor at the second point of time is different to the anchor position of at least the first anchor at the first point of time; and
S028: determining the AR-position and viewing direction of the AR glasses from the first angle and second angle.

Thus, it is sufficient to have a vacuum cleaner robot 12 that is moving and the docking station 14 having both a known position on the indoor map in order to facilitate determination of the AR-position and the viewing direction of the AR glasses.

In some embodiments dedicated AR markers are used on at least one, more than one or all of the IoT devices in the home. With the help of such AR markers, it becomes unnecessary for the user to identify which IoT devices he is currently looking at since the AR marker will provide that information and uniquely identifies the IoT device. Consequently, only by browsing the home, AR glasses will easily detect IoT devices and identify them due to their AR marker. Once this is done, the home automation system can determine the position of the AR glasses by mathematically compute it from the IoT-position of the IoT devices with AR markers and the viewing angles between them reported by the AR glasses as described above. Alternatively, the IoT-position of a single IoT device can also be computed by looking at it from two different positions of the AR glasses when compass information is available or three different positions of the AR glasses if only angle information (between the different viewing positions) is known.

The obvious advantage of this solution is that not only it is fully automatic, but this can also be fully transparent for the user provided there are enough (at least 3) IoT devices in the home that AR glasses can recognize and for which the positions on the map are known. The only thing required for this solution is to attach AR markers to the IoT devices. Such AR markers could be provided by the IoT manufacturer or downloaded later.

In another embodiment of this disclosure, the above mentioned embodiments can also be used to help with the real-time tracking of the AR glasses in the home by always having the positioning of the AR glasses running in the background.

In another embodiment at least one, more than one or all IoT devices are identified with object recognition techniques. Indeed, for some IoT devices, it is possible to use machine learning techniques and train AR glasses software in recognizing specific IoT devices. This has the obvious advantage of being a fully automatic and fully transparent solution.

In some embodiments the AR glasses include a compass in order to acquire compass information. Then, in a first step then compass information is connected to the indoor map and provide an absolute orientation of the indoor map with respect to the compass information. To do so, the first time the AR-position and viewing direction of the AR glasses is determined, the compass information is recorded with regards to this position.

Then later, whenever the AR-position and the viewing direction of the AR glasses are determined, the compass information can be used and being synchronized with the oriented map of the home to better position the AR glasses and increase accuracy. Further, if compass information is present, only two anchor points are required to uniquely identify the AR-position of the AR glasses. The use of a third anchors can nevertheless bring more precision.

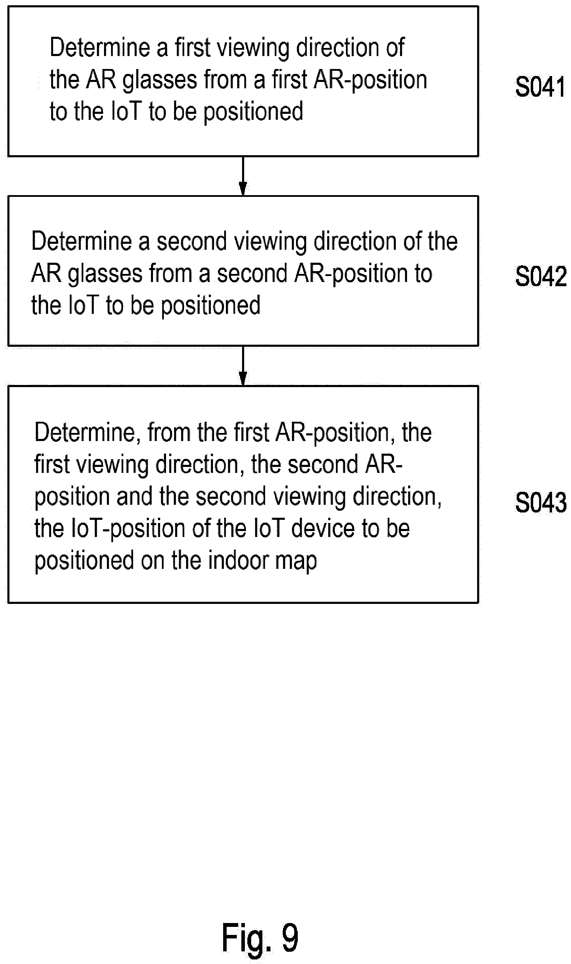

Fig. 9 shows an embodiment for positioning the IoT device including the steps of:

S041: determining a first viewing direction of the AR glasses from a first AR-position to the IoT to be positioned;
S042: determining a second viewing direction of the AR glasses from a second AR-position to the IoT to be positioned; and
S043: determine from the first AR-position, the first viewing direction, the second AR-position and the second viewing direction the IoT-position of the IoT device to be positioned on the indoor map.

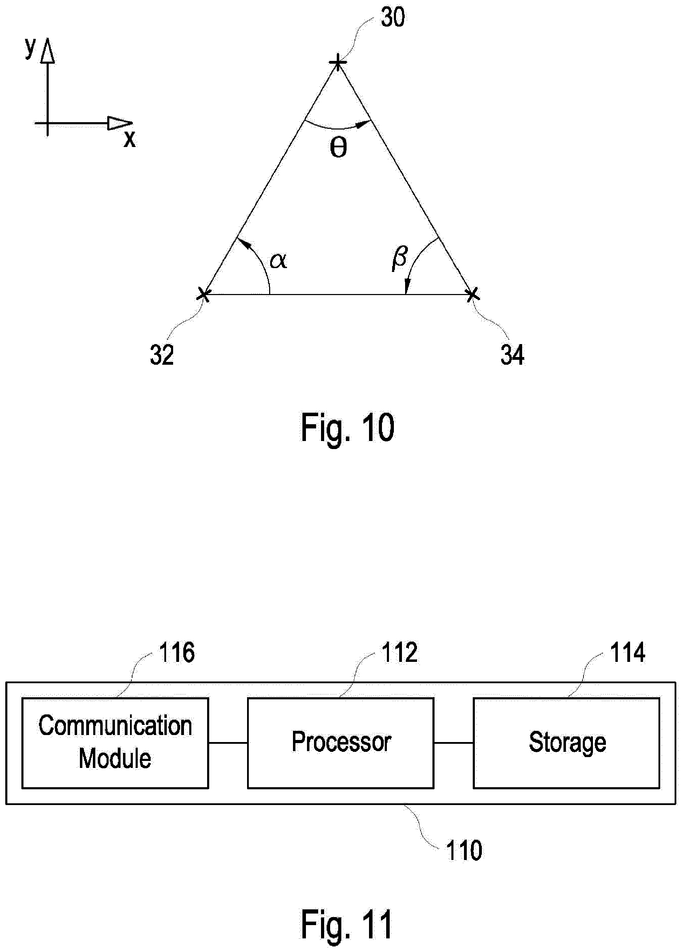

Fig. 10 shows schematically the situation for an IoT device 30 to be positioned. By the AR glasses having a known AR-position and viewing direction, from a first AR-position 32 a viewing direction as an angle α is determined with a compass. Afterwards from a second AR-position 34 a second viewing direction towards the IoT device 30 to be positioned is determined. Thus, by the first AR-position 32, the second AR-position 34, the first viewing direction a, and the second viewing direction β the IoT-position of the IoT device 30 can be determined with a compass. This, position can be assigned to the IoT device and stored for further usage. If the IoT device 30 is positioned on the indoor map 10 then the IoT device 30 can be used as anchor in order to determine the AR-position and viewing direction of the AR glasses.

If compass information is not available, only θ angle (the viewing angle between the two viewing positions) is known and a third viewing AR-position is needed to compute IoT device actual IoT-position. This is the same process used as for computing AR-position of the AR glasses as described hereinbefore.

Fig. 11 shows a device 110 comprising a processor 112 wherein the processor 112 is connected to a storage 114. The storage 114 stores instructions which when carried out by the processor 112 implement the steps of the method as previously described. Further, the processor 112 is connected to a communication module 116 in order to receive tracking information view directions compass information or the like from the AR glasses. Therein data transmission might be performed wireless via WLAN, WIFI, GSM, 3G, 4G, 5G, Bluetooth, ZigBee or any other standard.

Alternatively, instead of the communication module 116 the processor 112 and the storage 114 of the device 110 are directly connected to the AR glasses as one device.

Preferably, the processor can be any general-purpose processor, an ASIC, FPGA or any other kind of processing unit.

Preferably, the device is a terminal such as a smartphone, tablet, laptop or any other kind of devices. In particular, the device also includes a display to display the indoor map. Then, the IoT devices can be display at their respective positions on the indoor map. By interacting with the representation of the IoT devices on the terminal, the respective IoT devices in the home automation system are controlled.

Thus, by the present disclosure real time positioning and tracking of AR glasses worn by a user on an indoor map is enabled. By the AR glasses IoT devices can be positioned. By the precise IoT-position of the IoT device control of the IoT devices is simplified. In particular, an indoor map can be displayed on a terminal indicating the IoT devices on the indoor map wherein the IoT-positions of each IoT device is determined according to the present disclosure. Then, the IoT devices are easily accessible via the position on the indoor map.

**Claims**

1. Method of positioning an internet of things, IoT, device with augmented reality, AR, glasses, comprising:

   acquiring (S01) an indoor map (10);
   determining (S02) an AR-position (16) of the AR glasses on the indoor map (10) and a viewing direction (18) of the AR glasses based on initial information of the AR glasses;
   **characterized in that**,
   determining (S041) a first viewing direction of the AR glasses from a first AR-position to an IoT device (12) with a to be calculated position;
   determining (S042) at least a second viewing direction of the AR glasses from a second AR-position to the IoT device (12) with the to be calculated position; and
   determining (S043), at least from the first AR-position, the first viewing direction, the second AR-position, and the second viewing direction, an IoT-position of the IoT device (12) with the to be calculated position on the indoor map.

2. Method according to claim 1, **characterized in that** the initial information of the AR glasses comprises:
   receiving (S021) user input on a terminal indicating the AR-position (16) of the AR glasses on the indoor map (10) and the viewing direction (18).

3. Method according to claim 1, **characterized in that** determining the AR-position (16) of the AR glasses on the indoor map (10) and the viewing direction (18) of the AR glasses based on the initial information of the AR glasses comprises:

   receiving (S022) from the AR glasses tracking information concerning at least three anchors, wherein anchor positions (A, B, C) of the at least three anchors on the indoor map (10) are known;
   determining (S023) angles between any two of the at least three anchors from the respective tracking information; and
   determining (S024) the AR-position and viewing direction of the AR glasses from the angles.

4. Method according to claim 1, **characterized in that** determining the AR-position of the AR glasses on the indoor map and the viewing direction of the AR glasses based on the initial information of the AR glasses comprises:

   receiving (S025) from the AR glasses tracking information concerning a first anchor and at least one second anchor, wherein at least the first anchor is moving and anchor positions of the first anchor and the at least one second anchor on the indoor map are known;
   determining (S026) a first angle between the first anchor and the second anchor at a first point of time;
   determining (S027) a second angle between the first anchor and the second anchor at a second point of time, wherein the anchor position of the first anchor at the second point of time is different to the anchor position of the first anchor at the first point of time;
   determining (S028) the AR-position and viewing direction of the AR glasses from the first angle and second angle.

5. Method according to claim 3 or 4, **characterized in that** determining the angles between any two of the at least three anchors comprises:
   determining direction/sign of an angle between two of the anchors.

6. Method according to any of claims 3 to 5, **characterized in that** at least one anchor comprises an AR marking to be recognized by the AR glasses in order to identify the anchor.

7. Method according to any of claims 3 to 6, **characterized in that** at least one anchor is identified by the AR glasses by image recognition.

8. Method according to any of claims 1 to 7, **characterized in that** compass information of the AR glasses are determined and the indoor map is oriented according to the compass information.

9. Method according to claim 8, **characterized in that** determining the AR-position of the AR glasses on the indoor map and the viewing direction of the AR glasses based on the initial information of the AR glasses comprises:
   using the compass information in order to determine angles between at least two anchors and/or direction of each angle between any two of the at least two anchors.

10. Method according to any of claims 3 to 9, **characterized in that** the anchors are provided by one or more IoT devices.

11. Method according to any of claims 1 to 10, **characterized in that** the indoor map (10) is provided by a vacuum cleaner (12) and/or a surveillance camera.

12. Method according to any of claims 1 to 11, **charac-**

**terized in that**, further comprising:

determining a third viewing direction of the AR glasses from a third AR-position of the AR glasses to the IoT device (12) with the to be calculated position; and

wherein determining, at least from the first AR-position, the first viewing direction, the second AR-position, and the second viewing direction, the IoT-position of the IoT device (12) with the to be calculated position on the indoor map comprises:

determining, from the first AR-position, the first viewing direction, the second AR-position, the second viewing direction, the third viewing direction, and the third AR-position, the IoT-position of the IoT device (12) with the to be calculated position on the indoor map.

13. A data processing device comprising a processor and a memory storage, storing instructions which, when executed by the processor, are adapted to perform the method according to any one of claims 1 to 12.

14. A non-transitory computer-readable storage medium storing processor-executed instructions that, when executed by a processor, cause the processor to perform the method according to any one of claims 1 to 12.

**Patentansprüche**

1. Verfahren zur Positionierung einer Internet-of-Things-, (IoT), Vorrichtung mit Augmented-Reality-, AR, Brille, das umfasst:

Erfassen (S01) einer Indoor-Karte (10);
Bestimmen (S02) einer AR-Position (16) der AR-Brille auf der Indoor-Karte (10) und einer Blickrichtung (18) der AR-Brille basierend auf Ausgangsinformationen der AR-Brille;
**gekennzeichnet durch**
das Bestimmen (S041) einer ersten Blickrichtung der AR-Brille von einer ersten AR-Position zu einer IoT-Vorrichtung (12) mit einer zu berechnenden Position;
das Bestimmen (S042) mindestens einer zweiten Blickrichtung der AR-Brille von einer zweiten AR-Position zu der IoT-Vorrichtung (12) mit der zu berechnenden Position; und
das Bestimmen (S043), zumindest aus der ersten AR-Position, der ersten Blickrichtung, der zweiten AR-Position, und der zweiten Blickrichtung, einer IoT-Position der IoT-Vorrichtung (12) mit der zu berechnenden Position auf der Indoor-Karte.

2. Verfahren nach Anspruch 1, **dadurch gekennzeichnet, dass** die Ausgangsinformationen der AR-Brille umfassen:
Empfangen (S021) einer Benutzereingabe auf einem ersten Endgerät, welche die AR-Position (16) der AR-Brille auf der Indoor-Karte (10) und die Blickrichtung (18) angibt.

3. Verfahren nach Anspruch 1, **dadurch gekennzeichnet, dass** das Bestimmen der AR-Position (16) der AR-Brille auf der Indoor-Karte (10) und der Blickrichtung (18) der AR-Brille basierend auf den Ausgangsinformationen der AR-Brille umfasst:

Empfangen (S022) von Tracking-Informationen von der AR-Brille, die mindestens drei Anker betreffen, wobei die Ankerpositionen (A, B, C) der mindestens drei Anker auf der Indoor-Karte (10) bekannt sind;
Bestimmen (S023) von Winkeln zwischen zweien der mindestens drei Anker aus den jeweiligen Tracking-Informationen; und
Bestimmen (S024) der AR-Position und der Blickrichtung der AR-Brille aus den Winkeln.

4. Verfahren nach Anspruch 1, **dadurch gekennzeichnet, dass** das Bestimmen der AR-Position der AR-Brille auf der Indoor-Karte und der Blickrichtung der AR-Brille basierend auf den Ausgangsinformationen der AR-Brille umfasst:

Empfangen (S025) von Tracking-Informationen von der AR-Brille, die einen ersten Anker und mindestens einen zweiten Anker betreffen, wobei sich mindestens der ersten Anker bewegt und Ankerpositionen des ersten Ankers und des mindestens einen zweiten Ankers auf der Indoor-Karte bekannt sind;
Bestimmen (S026) eines ersten Winkels zwischen dem ersten Anker und dem zweiten Anker zu einem ersten Zeitpunkt;
Bestimmen (S027) eines zweiten Winkels zwischen dem ersten Anker und dem zweiten Anker zu einem zweiten Zeitpunkt, wobei sich die Ankerposition des ersten Ankers zu dem zweiten Zeitpunkt von der Ankerposition des ersten Ankers zu dem ersten Zeitpunkt unterscheidet;
Bestimmen (S028) der AR-Position und der Blickrichtung der AR-Brille aus dem ersten Winkel und dem zweiten Winkel.

5. Verfahren nach Anspruch 3 oder 4, **dadurch gekennzeichnet, dass** das Bestimmen der Winkel zwischen zweien der mindestens drei Anker umfasst:
Bestimmen der Richtung/des Vorzeichens eines Winkels zwischen zweien der Anker.

**6.** Verfahren nach einem der Ansprüche 3 bis 5, **dadurch gekennzeichnet, dass** mindestens ein Anker eine AR-Kennzeichnung zur Erkennung mittels der AR-Brille aufweist, um den Anker zu identifizieren.

**7.** Verfahren nach einem der Ansprüche 3 bis 6, **dadurch gekennzeichnet, dass** mindestens ein Anker von der AR-Brille mittels Bilderkennung identifiziert wird.

**8.** Verfahren nach einem der Ansprüche 1 bis 7, **dadurch gekennzeichnet, dass** Kompassinformationen der AR-Brille bestimmt werden und die Indoor-Karte entsprechend den Kompassinformationen orientiert ist.

**9.** Verfahren nach Anspruch 8, **dadurch gekennzeichnet, dass** das Bestimmen der AR-Position der AR-Brille auf der Indoor-Karte und der Blickrichtung der AR-Brille basierend auf den Ausgangsinformationen der AR-Brille umfasst:
Verwenden der Kompassinformationen, um Winkel zwischen mindestens zwei Ankern und/oder die Richtung jedes Winkels zwischen zweien der mindestens zwei Anker zu bestimmen.

**10.** Verfahren nach einem der Ansprüche 3 bis 9, **dadurch gekennzeichnet, dass** die Anker von einer oder mehreren IoT-Vorrichtungen bereitgestellt werden.

**11.** Verfahren nach einem der Ansprüche 1 bis 10, **dadurch gekennzeichnet, dass** die Indoor-Karte (10) von einem Staubsauger (12) und/oder einer Überwachungskamera bereitgestellt wird.

**12.** Verfahren nach einem der Ansprüche 1 bis 11, **dadurch gekennzeichnet, dass** das Verfahren ferner umfasst:

Bestimmen einer dritten Blickrichtung der AR-Brille von einer dritten AR-Position der AR-Brille zu der IoT-Vorrichtung (12) mit der zu berechnenden Position; und
wobei das Bestimmen, zumindest aus der ersten AR-Position, der ersten Blickrichtung, der zweiten AR-Position, und der zweiten Blickrichtung, der IoT-Position der IoT-Vorrichtung (12) mit der zu berechnenden Position auf der Indoor-Karte umfasst:
Bestimmen, aus der ersten AR-Position, der ersten Blickrichtung, der zweiten AR-Position, der zweiten Blickrichtung, der dritten Blickrichtung, und der dritten AR-Position, der IoT-Position der IoT-Vorrichtung (12) mit der zu berechnenden Position auf der Indoor-Karte.

**13.** Datenverarbeitungsvorrichtung, die einen Prozessor und einen Speicher aufweist, auf dem Anweisungen gespeichert sind, die bei Ausführung durch den Prozessor dazu ausgebildet sind, das Verfahren nach einem der Ansprüche 1 bis 12 durchzuführen.

**14.** Nichtflüchtiges computerlesbares Speichermedium, auf dem von einem Prozessor ausführbare Anweisungen gespeichert sind, die bei Ausführung durch einen Prozessor bewirken, dass der Prozessor das Verfahren nach einem der Ansprüche 1 bis 12 durchführt.

**Revendications**

**1.** Procédé de positionnement d'un dispositif Internet des Objets, IoT, avec des lunettes de réalité augmentée, AR, comprenant :

l'acquisition (S01) d'une carte d'intérieur (10) ;
la détermination (S02) d'une position d'AR (16) des lunettes AR sur la carte d'intérieur (10) et d'une direction d'observation (18) des lunettes AR en fonction d'informations initiales des lunettes AR ;
**caractérisé en ce que,**
la détermination (S041) d'une première direction d'observation des lunettes AR allant d'une première position d'AR à un dispositif IoT (12) avec une position à calculer ;
la détermination (S042) d'au moins une deuxième direction d'observation des lunettes AR allant d'une deuxième position d'AR au dispositif IoT (12) avec la position à calculer ; et
la détermination (S043), au moins à partir de la première position d'AR, de la première direction d'observation, de la deuxième position d'AR, et de la deuxième direction d'observation, d'une position IoT du dispositif IoT (12) avec la position à calculer sur la carte d'intérieur.

**2.** Procédé selon la revendication 1, **caractérisé en ce que** les informations initiales des lunettes AR comprennent :
la réception (S021) d'une entrée utilisateur sur un terminal indiquant la position d'AR (16) des lunettes AR sur la carte d'intérieur (10) et la direction d'observation (18).

**3.** Procédé selon la revendication 1, **caractérisé en ce que** la détermination de la position d'AR (16) des lunettes AR sur la carte d'intérieur (10) et de la direction d'observation (18) des lunettes AR en fonction des informations initiales des lunettes AR comprend :

la réception (S022) à partir des lunettes AR d'informations de suivi concernant au moins trois ancrages, dans lequel des positions d'ancrage (A, B, C) des au moins trois ancrages sur la carte d'intérieur (10) sont connues ;

la détermination (S023) d'angles entre deux quelconques parmi les au moins trois ancrages à partir des informations de suivi respectives ; et la détermination (S024) de la position d'AR et de la direction d'observation des lunettes AR à partir des angles.

4. Procédé selon la revendication 1, **caractérisé en ce que** la détermination de la position d'AR des lunettes AR sur la carte d'intérieur et de la direction d'observation des lunettes AR en fonction des informations initiales des lunettes AR comprend :

la réception (S025) à partir des lunettes AR d'informations de suivi concernant un premier ancrage et au moins un deuxième ancrage, dans lequel au moins le premier ancrage est mobile et des positions d'ancrage du premier ancrage et de l'au moins un deuxième ancrage sur la carte d'intérieur sont connues ; la détermination (S026) d'un premier angle entre le premier ancrage et le deuxième ancrage à premier point de temps ; la détermination (S027) d'un second angle entre le premier ancrage et le deuxième ancrage à un second point de temps, dans lequel la position d'ancrage du premier ancrage au second point de temps est différente de la position d'ancrage du premier ancrage au premier point de temps ; la détermination (S028) de la position d'AR et de la direction d'observation des lunettes AR à partir du premier angle et du second angle.

5. Procédé selon la revendication 3 ou 4, **caractérisé en ce que** la détermination des angles entre deux quelconques parmi les au moins trois ancrages comprend :

la détermination de la direction/du signe d'un angle entre deux des ancrages.

6. Procédé selon l'une quelconque des revendications 3 à 5, **caractérisé en ce qu'**au moins un ancrage comprend un marquage AR à reconnaître par les lunettes AR afin d'identifier l'ancrage.

7. Procédé selon l'une quelconque des revendications 3 à 6, **caractérisé en ce qu'**au moins un ancrage est identifié par les lunettes AR par reconnaissance d'image.

8. Procédé selon l'une quelconque des revendications 1 à 7,

**caractérisé en ce que** des informations de boussole des lunettes AR sont déterminées et la carte d'intérieur est orientée selon les informations de boussole.

9. Procédé selon la revendication 8, **caractérisé en ce que** la détermination de la position d'AR des lunettes AR sur la carte d'intérieur et de la direction d'observation des lunettes AR en fonction des informations initiales des lunettes AR comprend :
l'utilisation des informations de boussole afin de déterminer des angles entre au moins deux ancrages et/ou une direction de chaque angle entre deux quelconques des au moins deux ancrages.

10. Procédé selon l'une quelconque des revendications 3 à 9,
**caractérisé en ce que** les ancrages sont fournis par un ou plusieurs dispositifs IoT.

11. Procédé selon l'une quelconque des revendications 1 à 10,
**caractérisé en ce que** la carte d'intérieur (10) est fournie par un aspirateur (12) et/ou une caméra de surveillance.

12. Procédé selon l'une quelconque des revendications 1 à 11,
**caractérisé en ce qu'**il comprend en outre :

la détermination d'une troisième direction d'observation des lunettes AR allant d'une troisième position d'AR des lunettes AR au dispositif IoT (12) avec la position à calculer ; et dans lequel la détermination, au moins à partir de la première position d'AR, de la première direction d'observation, de la deuxième position d'AR et de la deuxième direction d'observation, de la position IoT du dispositif IoT (12) avec la position à calculer sur la carte d'intérieur comprend :
la détermination, à partir de la première position d'AR, de la première direction d'observation, de la deuxième position d'AR, de la deuxième direction d'observation, de la troisième direction d'observation et de la troisième position d'AR, de la position IoT du dispositif IoT (12) avec la position à calculer sur la carte d'intérieur.

13. Dispositif de traitement de données comprenant un processeur et un stockage de mémoire, stockant des instructions qui, lorsqu'elles sont exécutées par le processeur, sont conçues pour effectuer le procédé selon l'une quelconque des revendications 1 à 12.

14. Support de stockage non transitoire lisible par ordinateur stockant des instructions exécutées par un processeur qui, lorsqu'elles sont exécutées par un processeur, amènent le processeur à mettre en

**EP 3 910 967 B1**

oeuvre le procédé selon l'une quelconque des revendications 1 à 12.

| | |
|---|---|
| Acquiring an indoor map | S01 |

↓

| | |
|---|---|
| Determine an AR-position of the AR glasses on the indoor map and a viewing direction of the AR glasses based on initial information of the AR glasses | S02 |

↓

| | |
|---|---|
| Receiving from the AR glasses tracking information concerning the IoT device to be positioned | S03 |

↓

| | |
|---|---|
| Determine an IoT-position of the IoT device to be positioned from the determined position and viewing direction in combination with the tracking information of the AR glasses | S04 |

## Fig. 1

Fig. 2

Receive user input on a terminal indicating
the AR-position of the AR glasses on the
indoor map and the viewing direction

S021

## Fig. 3

10

14

18

16

12

## Fig. 4

Receiving from the AR glasses tracking information concerning at least three anchors, wherein the anchor positions of the at least three anchors on the indoor map are known

S022

Determine angles between any two of the at least three anchors from the respective tracking information

S023

Determine the AR-position and viewing direction of the AR glasses from the angles

S024

Fig. 5

Fig. 6

Fig. 7

Receive from the AR glasses tracking information concerning a first anchor and at least one second anchor, wherein at least the first anchor is moving and anchor positions of the first anchor and the at least one second anchor on the indoor map are known

S025

Determining a first angle between the first anchor and the second anchor at a first point of time

S026

Determining a second angle between the first anchor and the second anchor at a second point of time

S027

Determine the AR-position and viewing direction of the AR glasses from the first angle and second angle

S028

## Fig. 8

Determine a first viewing direction of the AR glasses from a first AR-position to the IoT to be positioned

S041

Determine a second viewing direction of the AR glasses from a second AR-position to the IoT to be positioned

S042

Determine, from the first AR-position, the first viewing direction, the second AR-position and the second viewing direction, the IoT-position of the IoT device to be positioned on the indoor map

S043

Fig. 9

Fig. 10

Communication Module

Processor

Storage

Fig. 11

**EP 3 910 967 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016239585 A1

- US 20200110934 A1